Europäisches Patentamt

European Patent Office

Office européen des brevets

(11) Veröffentlichungsnummer: **0 345 595**
**A2**

## EUROPÄISCHE PATENTANMELDUNG

(21) Anmeldenummer: 89109683.6

(22) Anmeldetag: 29.05.89

(51) Int. Cl.⁴: **B23Q 3/155**

(30) Priorität: 06.06.88 DE 3819210

(43) Veröffentlichungstag der Anmeldung:
**13.12.89 Patentblatt 89/50**

(84) Benannte Vertragsstaaten:
**AT BE CH DE ES FR GB GR IT LI LU NL SE**

(71) Anmelder: **Friedrich Deckel**
**Aktiengesellschaft**
**Plinganserstrasse 150**
**D-8000 München 70(DE)**

(72) Erfinder: **Geiger, Michael, Dipl.-Ing.**
**Ina-Seidel-Weg 8**
**D-8130 Starnberg(DE)**

(54) Werkzeugwechseleinrichtung für ein NC-gesteuertes Fertigungssystem.

(57) Die Erfindung betrifft eine Werkzeugwechseleinrichtung für ein NC-gesteuertes Fertigungssystem
mit einer oder mehreren Werkzeugmaschinen (2,4)
die jeweils mit einem Magazin (18) versehen sind,
umfassend eine den Werkzeugmaschinen (2,4) zugeordnete Werkzeughandhabungseinrichtung (34)
zum Austauschen von Werkzeugen zwischen jeweils
einem Werkzeugmagazin (18) und einer der Maschine zuführbaren Werkzeugträgerpalette (26) mit darauf angeordneten, codierten Werkzeugen (30). Die
Werkzeuge (30) sind auf der Trägerpalette 26 regellos, d.h. in zufälliger Verteilung angeordnet; im Greifbereich der Handhabungseinrichtung (34) ist eine mit
der NC-Steuerung verbundene, bewegliche Codierungserkennungseinrichtung (64,66) vorgesehen, die
von der Handhabungseinrichtung (36) ergreifbar und
in den Speicherplätzen der Trägerpalette (26) entsprechende Lesepositionen verstellbar ist. Die von
der Codierungserkennungseinrichtung gelesenen Daten werden in der Steuerung gespeichert, so daß die
Handhabungseinrichtung (34) einen gezielten Austausch der Werkzeuge (30) der Trägerpalette (26)
gegen die Werkzeuge (20) des Magazins (18) vornehmen kann.

FIG 1

FIG. 3

## Werkzeugwechseleinrichtung für ein NC-gesteuertes Fertigungssystem

Die Erfindung betrifft eine Werkzeugwechseleinrichtung der im Oberbegriff des Anspruches 1 genannten Art.

Bei modernen NC-gesteuerten Fertigungssystemen, sogenannten flexiblen Fertigungssystemen sind im allgemeinen mehrere Werkzeugmaschinen über eine Werkstückzuführungs- und Abführungseinrichtung miteinander verbunden, so daß die zu bearbeitenden Werkstücke von einem Aufspannplatz oder einem Speicher je nachdem, welche Arbeiten auszuführen sind, einer der Werkzeugmaschinen oder nacheinander mehreren Werkzeugmaschinen zugeführt und nach der Bearbeitung wieder zu einem Speicher transportiert werden können.

Die Werkzeugmaschinen sind im allgemeinen jeweils mit einem eigenen Werkzeugmagazin versehen, in welchem codierte Werkzeuge in regelloser Zufallsverteilung angeordnet sein können, wobei eine an der Maschine vorgesehene Detektoreinrichtung der Steuerung meldet, welche Werkzeuge sich an welchen Magazinplätzen befinden. Da die Werkzeugmagazine nur eine begrenzte Kapazität haben, ist es erforderlich, daß die Magazine von Zeit zu Zeit mit neuen Werkzeugen bestückt werden, sei es, daß für die Bearbeitung anderer Werkstücktypen andere Werkzeuge erforderlich sind oder daß abgenutzte oder beschädigte Werkzeuge ausgewechselt werden müssen.

Es ist bereits bekannt, auf besonderen Vorbereitungsplätzen Paletten vorzubereiten, welche die für die Neubestückung eines bestimmten Werkzeugmagazins benötigten Werkzeuge enthalten.

Die Palette wird dieser Werkzeugmaschine zugeführt; der Austausch der Werkzeuge zwischen der Palette und dem Werkzeugmagazin erfolgt beispielsweise von Hand oder mittels Handhabungseinrichtungen. Damit aus den auf der Palette befindlichen Werkzeugen die für den Austausch bestimmten Werkzeuge herausgesucht werden können, ist es erforderlich, daß diese Werkzeuge in irgendeiner Weise gekennzeichnet sind. Bei einem Austausch von Hand kann die Bedienungsperson die Werkzeugcodierung oder eine andere Kennzeichnung der auf der Palette befindlichen Werkzeuge lesen und die für den Austausch bestimmten Werkzeuge entnehmen, um sie gegen Werkzeuge im Werkzeugmagazin auszutauschen. Gesteuerte Handhabungseinrichtungen sind jedoch nicht in der Lage, die Codierung oder andere Kennzeichnungen der Werkzeuge zu lesen und aus der Menge der auf der Palette befindlichen Werkzeuge die richtigen Werkzeuge herauszusuchen. Es ist deshalb in diesem Fall erforderlich, die Werkzeuge platzcodiert anzuordnen, d.h. mit einer bestimmten, der Steuerung bekannten Ordnung. Dadurch wird der Aufwand für die Bestückung der Paletten am Vorbereitungsplatz für diese Paletten beträchtlich erhöht, da die Bedienungsperson sehr sorgfältig arbeiten muß. Fehler bei der Bestückung von Paletten führen im allgemeinen zu erheblichem Ausschuß, zu beschädigten Werkzeugen, zu beschädigten Werkzeugmaschinen und damit zu unproduktiven Stillstandzeiten der gesamten Anlage.

Es ist die Aufgabe der vorliegenden Erfindung, eine Werkzeugwechseleinrichtung der im Oberbegriff des Anspruches 1 genannten Art zu schaffen, bei welcher unter Reduzierung des Personalaufwandes der Werkzeugaustausch zwischen den Trägerpaletten und den Magazinen weitgehend automatisiert wird, wobei insbesondere Fehlermöglichkeiten beim Austausch der Werkzeuge und die damit verbundenen Nachteile vermieden werden sollen.

Diese Aufgabe ist erfindungsgemäß durch die im Kennzeichen des Anspruches 1 enthaltenen Merkmale gelöst.

Die Werkzeuge werden am Vorbereitungsplatz auf der Trägerpalette regellos, d.h. in zufälliger Verteilung, angeordnet, so wie es bisher nur für den Fall möglich war, daß der eigentliche Austausch zwischen Palette und Magazin von Hand vorgenommen wurde. Im Greifbereich der Handhabungseinrichtung ist eine mit der NC-Steuerung verbundene, bewegliche Codierungserkennungseinrichtung vorgesehen, die von der Handhabungseinrichtung selbst ergreifbar und in den Speicherplätzen der Trägerpalette entsprechende Lesepositionen verstellbar ist. Vor dem Austauschvorgang ergreift die Handhabungseinrichtung zunächst die Codierungserkennungseinrichtung und führt sie so über die Werkzeuge, daß sie die Codierungen lesen kann. Die gelesenen Informationen werden der Steuerung zugeführt, so daß diese die Anordnung der Werkzeuge auf der Palette kennt. Anschließend werden die für den Austausch bestimmten Werkzeuge der Trägerpalette gegen die zu ersetzenden Werkzeuge des Werkzeugmagazins ausgetauscht. Damit besteht ohne weiteres auch die Möglichkeit, eine einzelne Trägerpalette nacheinander mehreren Werkzeugmaschinen zuzuführen da die Steuerung auch in der Lage ist, bereits ausgetauschte Werkzeuge von neuen Werkzeugen zu unterscheiden usw.

Gemäß einer weiteren Ausgestaltung der Erfindung ist bei Werkzeugwechseleinrichtungen, bei denen die Werkzeuge in der Trägerpalette matrixartig in Zeilen- und Spaltenrichtung angeordnet sind, vorgesehen, daß die Codierungserkennungseinrichtung einen in Zeilenrichtung (bzw. Spaltenrichtung) angeordneten Bügel umfaßt, auf welchem jeweils eine der Anzahl der Spalten (bzw. Zeilen) entsprechende und im Abstand der Spalten (bzw. Zeilen) angeordnete Anzahl von Leseköpfen befestigt ist, wo bei der Bügel in Spaltenrichtung (bzw. Zeilenrichtung) über die Speicherplätze geführt wird. Damit kann der Lesevorgang erheblich beschleunigt werden, da jeweils alle in Zeilenrichtung (bzw. Spaltenrichtung) angeordneten Werkzeuge gleichzeitig gelesen werden.

Bei einer Werkzeugwechseleinrichtung gemäß dem Oberbegriff des Anspruches 1 mit einer Transportbahn für die Trägerpaletten und mit matrixartig in Transportrichtung verlaufenden Zeilen und quer dazu verlaufenden Spalten von Werkzeugen ist in einem anderen Ausführungsbeispiel der Erfindung vorgesehen, daß die Codierungserkennungseinrichtung einen in Spaltenrichtung verlaufenden Bügel mit einer der Anzahl der Zeilen entsprechenden und im Abstand der Zeilen angeordneten Anzahl von Leseköpfen umfaßt, welcher ortsfest zur Transportbahn angeordnet ist. In diesem Fall wird die Bewegung der Palette über die Codierungserkennungseinrichtung ausgenutzt, um nacheinander alle Spalten der Palette abzulesen.

Weitere Ausgestaltungen, Merkmale und Vorteile der Erfindung ergeben sich aus den Patentansprüchen, der Zeichnung sowie der Zeichnungsbeschreibung.

Mehrere Ausführungsbeispiele der Erfindung sind in dieser Zeichnung dargestellt und im folgenden näher beschrieben. Es zeigen:

Figur 1 schematisch eine Draufsicht auf ein Fertigungssystem mit einer Werkzeugwechseleinrichtung zum Austausch von Werkzeugen zwischen einer Trägerpalette und den Werkzeugmagazinen der einzelnen Werkzeugmaschinen;

Figur 2 schematisch eine Ansicht der Werkzeugwechseleinrichtung gemäß Figur 1 in Richtung des Pfeiles II;

Figuren 3 - 5 Ansichten verschiedener Ausführungsbeispiele der Werkzeugwechseleinrichtung gemäß Figur 1.

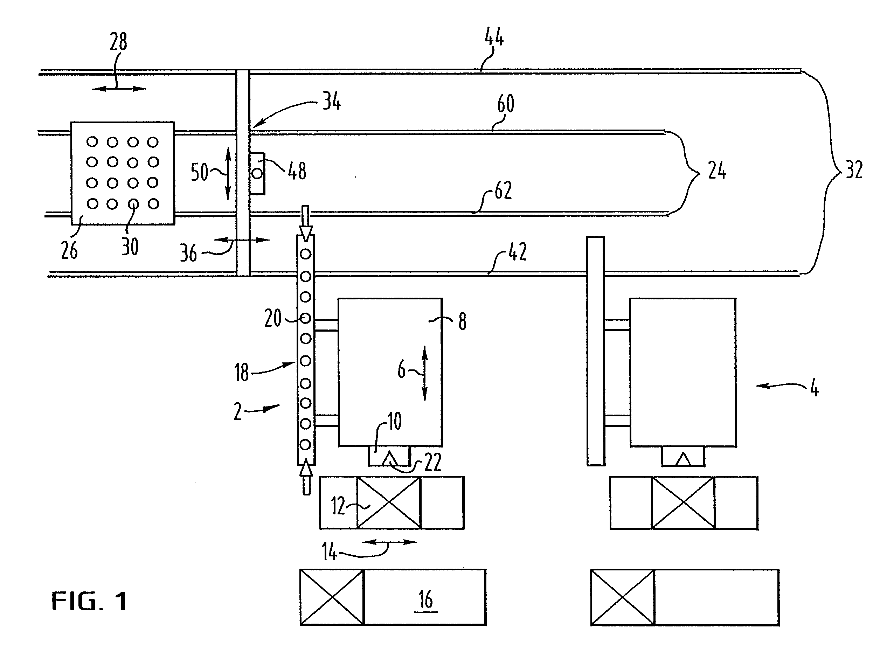

In Figur 1 sind zwei Werkzeugmaschinen 2, 4 dargestellt, die beispielsweise einen Teil eines aus mehreren Werkzeugmaschinen bestehenden Fertigungssystems darstellen. Die beiden Werkzeugmaschinen 2, 4 sind gleich aufgebaut, so daß im folgenden nur die Werkzeugmaschine 2 beschrieben wird. Sie besteht im dargestellten Ausführungsbeispiel aus einem in Richtung des Pfeiles 6 verfahrbaren Ständer 8, an welchem in vertikaler Richtung, d.h. senkrecht zur Zeichenebene verfahrbar ein Spindelkopf 10 angeordnet ist. Vor der Werkzeugmaschine 2 ist in Richtung des Pfeiles 14 horizontal verfahrbar ein Werkstücktisch 12 angeordnet. Der Werkstücktisch 12 nimmt beispielsweise auf Paletten aufgespannte Werkstücke auf, wie an sich bekannt und deshalb nicht näher beschrieben ist. Ferner sind der Werkzeugmaschine 2 ein Palettenwechsler 16 sowie eine nicht dargestellte Palettentransportbahn zugeordnet.

An einer Seite des Ständers 8 ist ein als Kettenmagazin ausgebildetes Werkzeugmagazin 18 angeordnet, welches verschiedene Werkzeuge 20 trägt. Die Werkzeuge 20 können mit Hilfe eines nicht dargestellten Werkzeugwechselarmes in die Spindelaufnahme 22 des Spindelkopfes 10 eingewechselt werden.

Hinter der Werkzeugmaschine 2 ist eine Transportbahn 24 für den Transport von Werkzeug-Trägerpaletten 26 angeordnet. Auf der Transportbahn 24 können die Trägerpaletten 26 in Richtung des Pfeiles 28 verfahren werden. Auf der Trägerpalette 26 sind Werkzeuge 30 matrixartig in Zeilen und Spalten ange ordnet; die Werkzeuge 30 sind dazu bestimmt, gegen Werkzeuge 20 aus dem Werkzeugmagazin 18 ausgetauscht zu werden, wie weiter vorne erläutert wurde.

Parallel zur Transportbahn 24 ist eine zweite Führungsbahn 32 angeordnet, auf der eine Handhabungseinrichtung 34 in Richtung des Pfeiles 36 verfahrbar gelagert ist. Die Handhabungseinrichtung 34 dient dazu, die in der Trägerpalette 26 gespeicherten Werkzeuge 30 gegen Werkzeuge 20 des Werkzeugmagazines 18 auszutauschen.

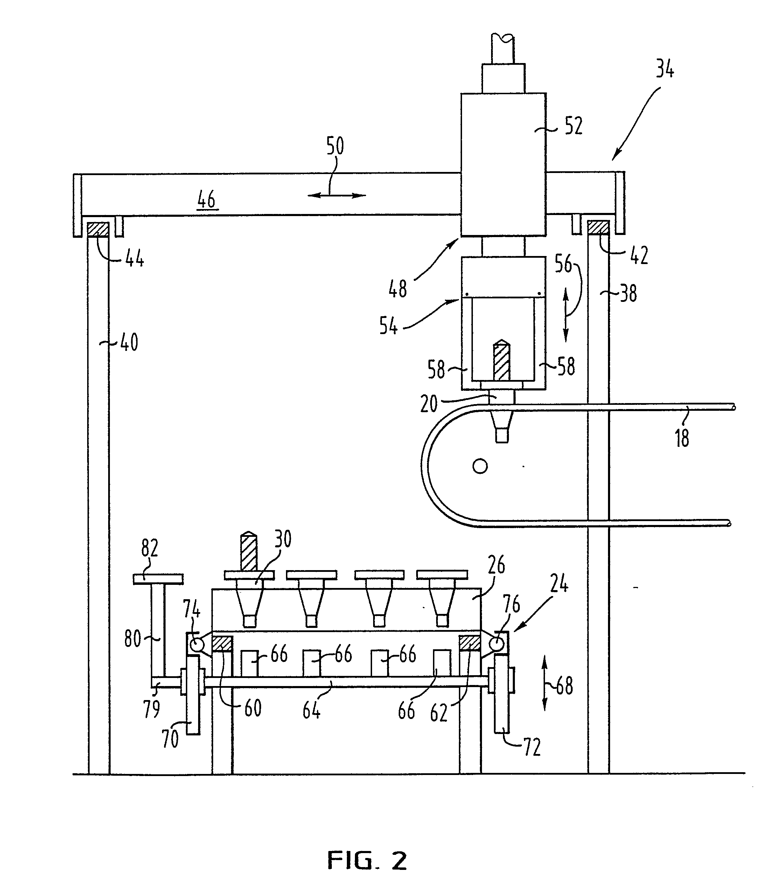

Wie insbesondere Figur 2 zeigt, besteht die Handhabungseinrichtung beispielsweise aus zwei auf Stützen 38, 40 gelagerten Schienen 42, 44, auf denen eine Traverse 46 in Richtung des Pfeiles 36 (siehe Figur 1) verschiebbar angeordnet ist. An der Traverse 46 ist eine Greifeinrichtung 48 in Richtung des Pfeiles 50 verfahrbar angeordnet. Der Greifer 48 besteht aus einem beispielsweise hydraulischen Stellantrieb 52, mittels dessen ein Greifkopf 54 vertikal in Richtung des Pfeiles 56 verstellbar ist. Der Greifkopf 56 weist beispielsweise zwei Arme 58 auf, die eine zangenartige Öffnungs- und Schließbewegung ausführen können um beispielsweise eines der Werkzeuge 20 des Kettenmagazins 18 bzw. eines der Werkzeuge 30 aus der Palette 26 greifen zu können.

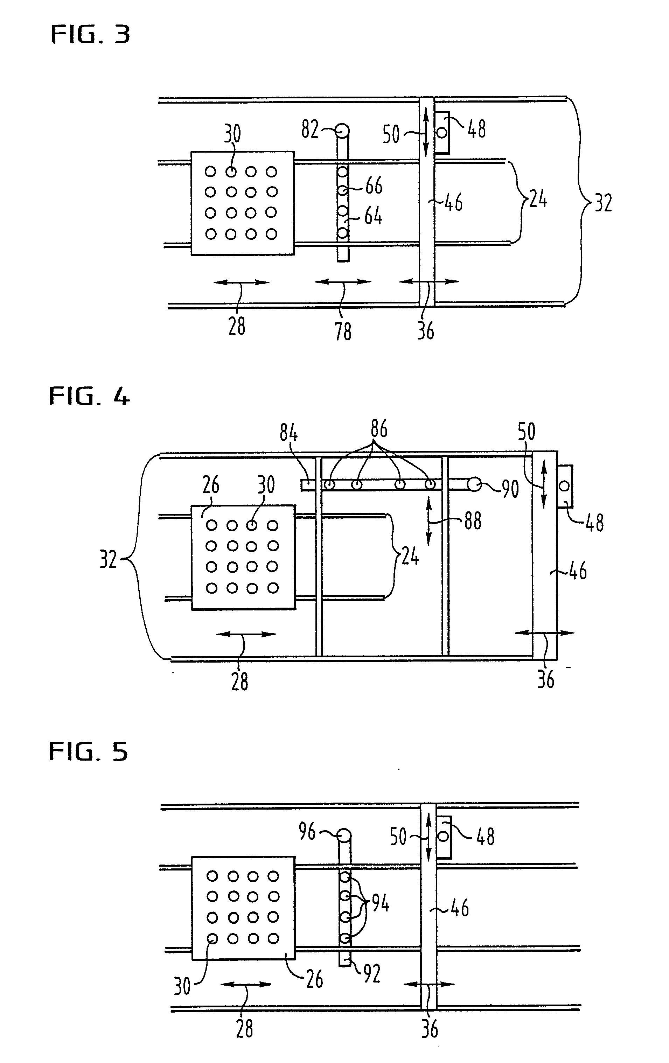

Die Palette 26 ist auf der aus zwei Schienen 60, 62 bestehenden Transportbahn 24 in Richtung des Pfeiles 28 (siehe Figur 1) verfahrbar, wie bereits beschrieben wurde. Die Werkzeuge 20 bzw. 30 tragen an der jeweiligen Werkzeugschaftkegelspitze in bekannter Weise eine Codierung. Unterhalb der Transportbahn 24 ist ein Bügel 64 angeordnet, welcher sich in Spaltenrichtung der Werkzeuge 30 erstreckt (siehe auch Figur 3). Er trägt eine der Anzahl der Zeilen entsprechende und im Abstand dieser Zeilen angeordnete Zahl von Leseköpfen 66.

Der Bügel 64 ist in Richtung des Pfeiles 68 vertikal verstellbar auf zwei beiderseits der Transportbahn 24 angeordneten Vertikalstützen 70, 72 gelagert, die ihrerseits über an den Schienen 60, 62 angeordneten Schienen 74, 76 in Richtung des Pfeiles 78 (siehe Figur 3) verstellbar gelagert sind. An einem seitlich über die Vertikalstütze 70 überstehenden Ende 79 des Bügels 64 ist eine vertikale Strebe 80 befestigt, an deren oberem Ende ein Flansch 82 befestigt ist, welcher den an den Werkzeugschäften ausgebildeten Flanschen exakt entspricht.

Um den Bügel 64 mit den Leseköpfen 66 zu verstellen, wird der Greifer 48 so verfahren, daß die Greifarme 58 den Flansch 82 ergreifen können. Sodann wird der Greifkopf 54 vertikal nach oben verfahren, bis die Leseköpfe 66 eine Leseposition in der Nähe der Werkzeuge 30 haben. Sodann wird der Bügel 64 in Zeilenrichtung verfahren, wobei jeder Lesekopf 66 eine Werkzeugzeile abtastet. Das Ergebnis der Abtastung wird in die zentrale Steuerung eingegeben, die die Position der Werkzeuge 30 speichert. Anschließend wird der Bügel 64 wieder in seine Außerbetriebsstellung gefahren. Der Greifer 48 kann jetzt gezielt die der Steuerung bekannten Werkzeuge gegen im Kettenmagazin befindliche Werkzeuge austauschen.

Figur 3 zeigt schematisch eine Anordnung gemäß den Figuren 1 und 2, bei welcher der Bügel 64 in Richtung des Pfeiles 78 verfahrbar ist und eine der Anzahl der Zeilen entsprechende Anzahl von Leseköpfen 66 trägt.

Figur 4 zeigt eine Anordnung, bei der ein Bügel 84 quer zur Transportrichtung 28 der Palette 26, d.h. in Richtung des Pfeiles 88 verstellbar ist. Er weist eine der Zahl der Spalten der Werkzeuge 30 entsprechende Anzahl von Leseköpfen 86 auf, so daß die Palette in Spaltenrichtung überstrichen wird. Ein entsprechend den Flanschen der Werkzeugkegel geformter Flansch 90 dient wiederum dazu, vom Greifer 48 ergriffen zu werden, um den Bügel 84 in vertikaler Richtung sowie in Richtung des Pfeiles 88 zu verstellen.

Figur 5 zeigt ein weiteres Ausführungsbeispiel, bei welchem ein Bügel 92 in horizontaler Richtung stationär angeordnet ist. In diesem Fall wird die Bewegung der Palette 26 in Richtung des Pfeiles 28 dazu ausgenützt, um die Werkzeuge 30 in Zeilenrichtung durch die auf dem Bügel 92 angeordneten Leseköpfe 94 abzutasten. Ein entsprechend dem Flansch der Werkzeugschäfte geformter Flansch 96 dient wiederum dazu, durch den Greifer 48 ergriffen und in vertikaler Richtung verstellt zu werden.

## Ansprüche

1. Werkzeugwechseleinrichtung für ein NC-gesteuertes Fertigungssystem mit einer oder mehreren Werkzeugmaschinen (2, 4), die jeweils mit einem Werkzeuge aufnehmenden Werkzeugmagazin (18) ausgestattet sind, umfassend eine den Werkzeugmaschinen (2,4) zugeordnete Werkzeug-Handhabungseinrichtung (34) zum Austauschen von Werkzeugen zwischen jeweils einem Werkzeugmagazin (18) einer Maschine und einer der Maschine zuführbaren Werkzeug-Trägerpalette (26) mit darauf angeordneten, codierten Werkzeugen, dadurch **gekennzeichnet**, daß die Werkzeuge (30) auf der Trägerpalette regellos angeordnet sind und daß im Greifbereich der Handhabungseinrichtung (34) eine mit der NC-Steuerung verbundene, bewegliche Codierungserkennungseinrichtung (64,66) vorgesehen ist, die von der Handhabungseinrichtung (34) ergreifbar und in den Speicherplätzen der Trägerpalette (26) entsprechende Lesepositionen verstellbar ist.

2. Werkzeugwechseleinrichtung nach Anspruch 1, wobei die Werkzeuge in der Trägerpalette (26) matrixartig in Zeilen- und Spaltenrichtung angeordnet sind, dadurch **gekennzeichnet**, daß die Codierungserkennungseinrichtung einen in Zeilenrichtung (bwz. Spaltenrichtung) angeordneten Bügel (64) umfaßt, auf welchem jeweils eine der Anzahl der Spalten (bzw. Zeilen) entsprechende und im Abstand der Spalten (bzw. Zeilen) angeordnete Anzahl von Leseköpfen (66) befestigt ist, wobei der Bügel (64) in Spaltenrichtung (bzw. Zeilenrichtung) über die Speicherplätze geführt wird.

3. Werkzeugwechseleinrichtung nach Anspruch 1 oder 2, mit einer Transportbahn (24) für die Trägerpaletten und einer zur Transportbahn parallelen Führungsbahn für die Handhabungseinrichtung, dadurch **gekennzeichnet**, daß der Bügel (64) quer zur Transportbahn (24) ausgerichtet und in Transportbahnrichtung verschiebbar gelagert ist.

4. Werkzeugwechseleinrichtung nach Anspruch 2, mit einer Transportbahn (24) für die Trägerpaletten (26) und einer zur Transportbahn parallelen Führungsbahn (32) für die Handhabungseinrichtung (34), dadurch **gekennzeichnet**, daß der Bügel (84) in Richtung der Transportbahn (24) ausgerichtet und quer zur Transportbahn (24) verschiebbar gelagert ist.

5. Werkzeugwechseleinrichtung nach Anspruch 3 oder 4, wobei die Werkzeuge (30) ihren die Codierung tragenden Werkzeugschäften nach unten in den Trägerpaletten (26) angeordnet sind, dadurch **gekennzeichnet**, daß der Bügel (64,84,92) unterhalb der Transportbahn der Paletten (26) angeordnet ist und daß er zwischen einer unteren, den Werkzeugschäften fernen Außerbetriebsstellung und einer oberen, den Werkzeugschäften nahen Betriebsstellung höhenverstellbar gelagert ist.

6. Werkzeugwechseleinrichtung nach einem der Ansprüche 2 bis 5, dadurch **gekennzeichnet**, daß am Bügel (64, 84,92) ein dem Greifflansch der Werkzeugschäfte für den Angriff eines Greifers (54) der Handhabungseinrichtung (34) entsprechend geformter Greifflansch (82,90,96) angeordnet ist.

7. Werkzeugwechseleinrichtung nach einem der Ansprüche 3 und 5 bis 6, dadurch **gekennzeichnet**, daß der Bügel (64) an der Transportbahn (24) für die Trägerpaletten (26) verschiebbar gelagert ist.

8. Werkzeugwechseleinrichtung nach dem Oberbegriff des Anspruches 1, mit einer Transportbahn (24) für die Trägerpaletten (26), wobei die Werkzeuge matrixartig mit in Transportrichtung (28) verlaufenden Zeilen und quer dazu verlaufenden Spalten in den Trägerpaletten (26) angeordnet sind, dadurch **gekennzeichnet**, daß die Codierungserkennungseinrichtung (92,94) einen in Spaltenrichtung verlaufenden Bügel (92) mit einer der Anzahl der Zeilen entsprechenden und im Abstand der Zeilen angeordneten Anzahl von Leseköpfen (94) umfaßt, welcher ortsfest zur Transportbahn (24) angeordnet ist.

FIG. 1

EP 0 345 595 A2

FIG. 2

FIG. 3

FIG. 4

FIG. 5